# EUROPÄISCHE PATENTSCHRIFT

(11) **EP 2 683 976 B1**
(45) Veröffentlichungstag und Bekanntmachung des Hinweises auf die Patenterteilung: **13.07.2022**
(21) Anmeldenummer: 12707579.4
(22) Anmeldetag: 06.03.2012
(51) Int. Cl.: F16L 37/244, F16L 15/00, F16L 37/252, F42D 3/04, F16L 37/00

(54) **DRUCK-/ENTLADUNGSROHR-VERBINDUNG**
PRESSURE/DISCHARGE PIPE CONNECTION
RACCORD DE TUYAU DE PRESSION ET DE DÉCHARGE

(30) Priorität: 11.03.2011 DE 202011003817 U
(43) Veröffentlichungstag der Anmeldung: 15.01.2014
(73) Patentinhaber: Atd-Abbausysteme GmbH, 44379 Dortmund (DE)
(72) Erfinder: ROHDE, Jörg, 58455 Witten (DE)
(74) Vertreter: Meinke, Jochen
(86) Internationale Anmeldenummer: PCT/EP2012/053775
(87) Internationale Veröffentlichungsnummer: WO 2012/123277

(56) Entgegenhaltungen:
- DE-U1- 8 805 087
- US-A- 4 909 545
- US-A1- 2005 079 010
- ATD-Abbausysteme GmbH: "Load it up. Lock it in. Blow it away!", , 29. Juli 2004 (2004-07-29), Seiten 1-10, XP002684991, Gefunden im Internet: URL:http://web.archive.org/web/20040729060 446/http://www.atd-cardox.com/downloads/fl yer-english-large.pdf [gefunden am 2012-10-10] & Internet Archive Wayback Machine: , 10. Oktober 2012 (2012-10-10), Gefunden im Internet: URL:http://wayback.archive.org/web/2004091 5000000*/http://www.atd-cardox.com/downloa ds/flyer-english-large.pdf [gefunden am 2012-10-10]

## Beschreibung

Die Erfindung richtet sich auf eine Vorrichtung zur lösbaren Verbindung eines bei dem Gebrauch axialen Kräften unterworfenen Druck-/Entladungsrohres mit einem weiteren Rohrstück.

Es gibt bei vielen Verfahrensweisen, wie etwa in der Zementindustrie, in Kalkwerken, in Müllverbrennungsanlagen, Anlagenteile, die sich bei Gebrauch mit einem Belag zusetzen oder auf denen sich ein Belag niederschlägt, den es von Zeit zu Zeit zu entfernen gilt. Zur Entfernung derartiger Beläge ist es bekannt, die Wand des entsprechenden Anlageteiles zu durchbohren, ein Druck-/Entladungsrohr durch die Bohrung in den Belag einzuführen, das entsprechende Druck-/Entladungsrohr zu fixieren und durch eine Zündung ein Gasvolumen in die zu entfernende Schicht blitzartig einzuführen und diese loszusprengen. Häufig wird ein solches Verfahren im Heißbereich derartiger Anlagen eingesetzt, so dass es notwendig ist, sehr schnell zu einem guten Ergebnis der Belagentfernung zu kommen, um möglichst während der laufenden Produktion Stillstandzeiten zu verhindern oder sehr stark zu verringern.

Es gibt hier auch andere Anwendungsgebiete, wie beispielsweise das Lockern ammonnitrathaltiger Volldünger, das Lösen feinverfestigter Kalkwerkskohle in Kohlenbunkern oder ähnliche Anwendungsbereiche.

Die im betriebsfertigen Zustand eingesetzten Druck-/Gasrohre, sie sind mit Betriebsmaterial versehen und mit CO₂ gefüllt, werden mittels sogenannter Spannhülsen und Fußstücken mit den Anlagen verbunden. Über ein Zündkabel wird dann die Zündung ausgelöst, wobei als hauptsächliches Verbrennungsprodukt gasförmiges CO₂ entsteht. Die Broschüre "Load it up. Lock it in.

Blow it away!" offenbart eine bekannte Vorrichtung, siehe http://web.archive.org/ web/20040729060446/http://www.atd-cardox.com/downloads/flyer-english-large.pdf Aufgabe der Erfindung ist die Schaffung einer Lösung, mit der derartige Druckgasrohre nicht nur mit der entsprechenden Anlagenwand verbunden werden können, sondern mit extremer Sicherheit auch verriegelt werden können, selbst dann, wenn beispielsweise auf das Druckgasrohr hohe axiale Kräfte ausgeübt werden.

Diese Aufgabe wird mit einer Vorrichtung mit den Merkmalen des Patentanspruchs 1 gelöst.

Mit der Erfindung werden einmal die einem Trapezgewinde innewohnenden Vorteile der Montage genutzt, gleichzeitig wird durch die Gewindegestaltung die Aufnahme hoher Axialkräfte sichergestellt und damit eine praktisch 100 %-ige Verriegelungssicherheit gewährleistet. Rohrverbindungen mittels Gewinden sind bekannt z.B. durch DE 88 05 087 U, wobei dort nicht so hohe axiale Kräfte aufgefangen werden müssen.

Ausgestaltungen der Erfindung ergeben sich aus den Unteransprüchen.

In einer Ausgestaltung ist vorgesehen, dass zwischen dem Druck-/Entladungsrohr und dem weiteren Rohrstück ein Kupplungselement mit zwei, als Trapezgewinde ausgebildeten Gewindebereichen vorgesehen ist.

Als Trapezgewinde können einfache Trapezgewinde ebenso vorgesehen sein wie Doppelgewinde.

Weitere Einzelheiten, Merkmale und Vorteile der Erfindung ergeben sich aufgrund der nachfolgenden Beschreibung sowie anhand der Zeichnung. Diese zeigt in
- Fig. 1: eine vereinfachte Explosionsdarstellung einer erfindungsgemäßen Vor-richtung sowie in
- Fig. 2: eine Schnittzeichnung eines abgewandelten Ausführungsbeispieles.

Eine allgemein mit 1 bezeichnete Vorrichtung dient zur lösbaren Verbindung eines Druck-/Entladungsrohres 2 an einem weiteren Rohrstück 3, das in der Gebrauchslage die Wand 4 eines Anlageteiles durchsetzt und in einen nicht näher dargestellten Belag im Inneren des Anlagenteiles eintaucht, um über Gasauslassöffnungen 5 ein Druckgas in diesen Belag mit hoher Geschwindigkeit einzuleiten, um diesen Belag dann aufzubrechen, um ihn entfernen zu können.

Zur Verbindung dieses Druck-/Entladungsrohres 2 mit dem weiteren Rohrstück 3 ist das eine Ende des Druck-/Entladungsrohres 2 mit einem Trapezgewinde 6 ausgerüstet.

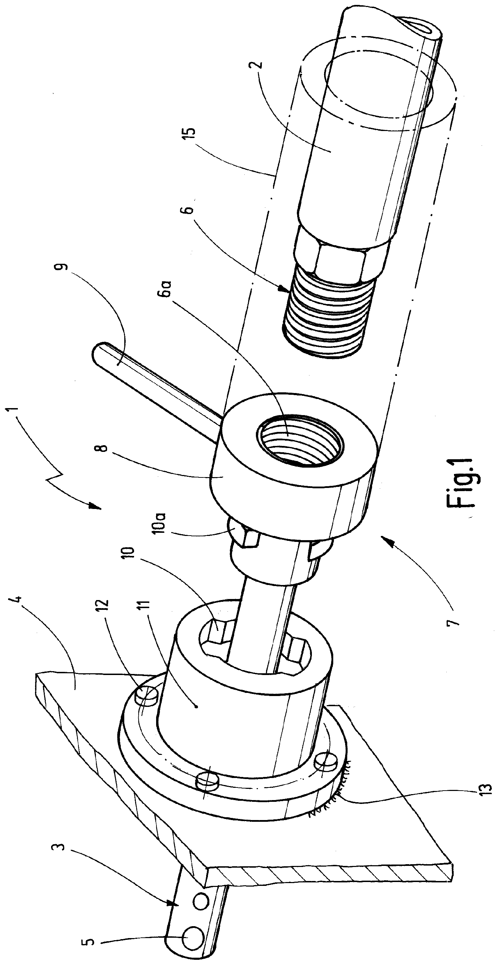

In dem in Fig. 1 dargestellten Beispiel ist das weitere Rohrstück 3 mit einem Element eines allgemein mit 7 bezeichneten Verriegelungskörpers ausgerüstet, welches in einem einstückigen Ringelement 8 mit Handhabungsgriff 9 das Gegenstück des Trapezgewindes 6 trägt. Dieses Gegen-Trapezgewinde ist in Fig. 1 mit 6a bezeichnet.

Beim Ausführungsbeispiel der Fig. 1 ist an der Wand 4 des entsprechenden Anlagenteiles ein ein Gegenelement 10 eines Bajonettverschlusses aufweisendes topfförmiges Gegenelement 11 des Verriegelungskörpers 7 fest montiert, sei es mittels Schrauben 12 verschraubt oder aber, was in Fig. 1 nur angedeutet ist, mit der Wand 4 verschweißt. Die angedeutete Schweißnaht trägt das Bezugszeichen 13.

Aus Fig. 1 ist auch ersichtlich, dass am Ringelement 8 an dem in der Gebrauchslage auf das topfförmige Gegenelement 11 weisende Ende ein Element 10a als Gegenstück des Bajonettverschlusses angeformt ist, so das mittels des Handhabungsgriffes 9 das Rohrstück 3 nach Durchsetzen der Wand 4 mittels des Bajonettverschlusses dort verriegelt werden kann. Ist dies geschehen, kann dann das Druck-/Entladungsrohr 2 über das Trapezgewinde 6 eingeschraubt werden.

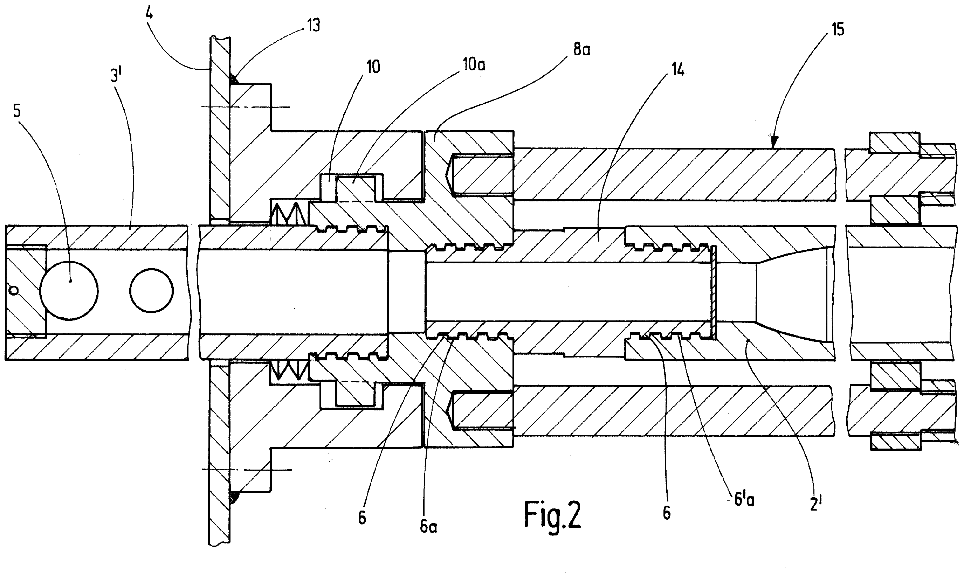

In Fig. 2 ist ein abgewandeltes Beispiel dargestellt. Hier beaufschlagt ein Trapezinnengewinde 6'a an einem Ende des Druck-/Entladungsrohres 2' ein Trapezaußengewinde 6 an einem Kupplungselement 14, das zwischen dem Druck-/Entladungsrohr 2 einerseits und dem weiteren Rohrstück 3' andererseits vorgesehen ist, wobei das Rohrstück 3' wiederum über ein Trapezgewinde im Inneren des Ringelementes 8a des Verriegelungskörpers 7 ebenso wie das Kupplungselement 14 verschraubt ist.

An dieser Stelle sei bemerkt, dass auch eine Gestaltung möglich ist, bei der der Verriegelungskörper 7 einstückig an der Wand befestigt ist und dauerhaft mit dem Rohrstück 3 ausgerüstet ist, so dass dann lediglich bei Bedarf das Gas-/Entladungsrohr 2 dort eingeschraubt ist. Das entsprechende Trapezgewinde im Verriegelungskörper kann beispielsweise durch eine Kunststoffkappe oder ein ähnliches Element vor Schmutz geschützt sein, wenn es nicht benötigt wird.

In Fig. 2 ist noch angedeutet, dass um das Druck-/Entladungsrohr 2 ein Haltekäfig 15 vorgesehen sein kann, um das Abknicken zu verhindern. Dieser Haltekäfig 15 ist in Fig. 1 lediglich strichpunktiert angedeutet.

### Bezugszeichenliste:

- 1: Vorrichtung
- 2, 2': Druck-/Entladungsrohr
- 3, 3': Rohrstück
- 4: Wand
- 5: Gasauslassöffnungen
- 6, 6a, 6'a: Trapezgewinde
- 7: Verriegelungskörper
- 8, 8a: Ringelement
- 9: Handhabungsgriff
- 10, 10a: Bajonettverschluss
- 11: Topfförmiges Gegenelement
- 12: Schrauben
- 13: Schweißnaht
- 14: Kupplungselement
- 15: Haltekäfig

## Patentansprüche

1. Vorrichtung (1) zur lösbaren Verbindung eines bei dem Gebrauch axialen Kräften unterworfenen Druck-/Entladungsrohres (2,2') mit einem weiteren Rohrstück (3,3'), wobei die Vorrichtung das Druck-/Entladungsrohr (2,2'), das weitere Rohrstück (3,3') und einen Verriegelungskörper (7) aufweist, wobei das weitere Rohrstück (3,3') mit einem einstückigen, einen Handhabungsgriff (9) aufweisenden Ringelement (8,8a) des Verriegelungskörpers (7) ausgerüstet ist, wobei der Verriegelungskörper (7) ein topfförmiges Gegenelement (11) zur Befestigung an einer Wand (4) eines Anlageteils aufweist, wobei das Ringelement (8,8a) mit einem Element (10a) eines Bajonettverschlusses und das topfförmige Gegenelement (11) mit einem Gegenelement (10) des Bajonettverschlusses versehen ist, wobei das Rohrstück (3,3') mit dem Ringelement (8,8a) des Verriegelungskörpers (7) am topfförmigen Gegenelement (11) verriegelbar ist, wobei das weitere Rohrstück (3,3') die Wand (4) in der Gebrauchslage durchsetzt und in einen Belag im Inneren des Anlageteils eintaucht, wobei das Druck-/Entladungsrohr (2,2') zur Einbringung eines Druckstoßes durch ein blitzartiges Einführen eines gezündeten Gasvolumens durch Gasauslassöffnungen (5) des Rohrstückes (3,3') in den Belag ausgebildet ist, wobei am Druck-/Entladungsrohr (2,2') ein Trapezaußengewinde (6,6'a) und am Ringelement (8,8a) des Verriegelungskörpers (7) ein Trapezinnengewinde (6a) vorgesehen ist.

2. Vorrichtung nach Anspruch 1,
**dadurch gekennzeichnet,**
**dass** zwischen dem Druck-/Entladungsrohr (2') und dem weiteren Rohrstück (3') ein Kupplungselement (14) mit zwei, als Trapezgewinde (6) ausgebildeten Gewindebereichen vorgesehen ist.

3. Vorrichtung nach Anspruch 1 oder 2,
**dadurch gekennzeichnet,**
**dass** ein Biegekräfte aufnehmender Haltekäfig (15) am Verriegelungskörper (7) vorgesehen ist.

## Claims

1. Device (1) for the releasable connection of a pressure/discharge pipe (2, 2') subjected to axial forces during use to a further pipe section (3, 3'), wherein the device comprises the pressure/discharge pipe (2, 2'), the further pipe section (3, 3') and a locking body (7), wherein the further pipe section (3, 3') is provided with a one-piece, ring element (8, 8a) of the locking body (7) having a handle (9), wherein the locking body (7) has a pot-like counter element (11) for fastening to a wall (4) of an abutment part, wherein the ring element (8, 8a) is provided with an element (10a) of a bayonet closure and the pot-like counter element (11) is provided with a counter element (10) of the bayonet closure, wherein the pipe section (3, 3') can be locked with the ring element (8, 8a) of the locking body (7) onto the pot-like counter element (11), wherein the further pipe section (3, 3') passes through the wall (4) in the position of use and is immersed in a lining inside the abutment part, wherein the pressure/discharge pipe (2, 2') is configured for introducing a pressure surge by a flash-like introduction of an ignited gas volume through gas outlet openings (5) of the pipe section (3, 3') into the lining, wherein an external trapezoidal thread (6, 6'a) is provided on the pressure/discharge pipe (2, 2') and an internal trapezoidal thread (6a) is provided on the ring element (8, 8a) of the locking body (7).

2. Device according to claim 1,
**characterised in that**
a coupling element (14) with two threaded sections in the form of a trapezoidal thread (6) is provided between the pressure/discharge pipe (2') and the further pipe section (3').

3. Device according to claim 1 or 2,
**characterised in that**
a retaining cage (15) which absorbs bending forces is provided on the locking body (7).

## Revendications

1. Dispositif (1) pour relier de manière libérable un tuyau de pression/de décharge (2, 2'), soumis en service à des forces axiales, à un autre élément de tuyau (3, 3'), dans lequel le dispositif comprend le tuyau de pression/de décharge (2,2'), l'élément de tuyau (3,3') et un corps de verrouillage (7), dans lequel l'autre élément de tuyau (3,3') est équipé d'un élément annulaire (8,8a) d'un seul tenant du corps de verrouillage (7) présentant une poignée de manipulation (9), dans lequel le corps de verrouillage (7) présente un élément antagoniste en forme de coupelle (11) pour une fixation à une paroi (4) d'une partie d'installation, dans lequel l'élément annulaire (8,8a) est pourvu d'un élément (10a) d'une fermeture à baïonnette et le élément antagoniste en forme de coupelle (11) d'un élément (10) d'une fermeture à baïonnette, dans lequel l'élément de tuyau (3,3') peut être verrouillé avec l'élément annulaire (8,8a) du corps de verrouillage (7) sur l'élément antagoniste en forme de coupelle (11), dans lequel l'autre élément de tuyau (3,3') traverse la paroi (4) en position d'utilisation et plonge dans un revêtement à l'intérieur de la partie d'installation, dans lequel le tuyau de pression/de décharge (2,2') est conçu pour introduire une surpression en introduisant un volume de gaz enflammé dans le revêtement en un éclair à travers des ouvertures de sortie de gaz (5) de l'élément de tuyau (3,3'), dans lequel un filetage extérieur trapézoïdal (6,6'a) est prévu sur le tuyau de pression/de décharge (2,2') et un filetage intérieur trapézoïdal (6a) est prévu sur l'élément annulaire (8,8a) du corps de verrouillage (7).

2. Dispositif selon la revendication 1,
**caractérisé en ce que**
entre le tuyau de pression/de décharge (2') et l'autre élément de tuyau (3') est prévu un élément de couplage (14) avec deux zones de filetage conçues sous la forme d'un filetage trapézoïdal (6).

3. Dispositif selon la revendication 1 ou 2,
**caractérisé en ce que**
une cage de retenue (15) absorbant les forces de flexion est prévue sur le corps de verrouillage (7).
